# EUROPEAN PATENT APPLICATION

(11) **EP 3 742 348 A1**
(43) Date of publication of application: **25.11.2020**
(21) Application number: 19176181.6
(22) Date of filing: 23.05.2019
(51) Int. Cl.: G06N 3/063

(54) **METHOD TO SET THE TYPE OF WRITING TO EITHER INTERNAL OR EXTERNAL MEMORY FOR LAYERS OF A COMPUTER-IMPLEMENTED NEURAL NETWORK**

(71) Applicant: Robert Bosch GmbH, 70442 Stuttgart (DE)
(72) Inventor: Koehler, Rolf Michael, 72135 Dettenhausen (DE); Guo, Ze, 70173 Stuttgart (DE)

(57) **Abstract**

The invention describes a method to set the type of writing to either internal or external memory for layers of a computer-implemented neural network comprising at least three layers, wherein the output data of each layer is written to an internal memory and/or external memory, including the following steps:
• Dividing the layers of the neural network into at least two layer groups;
• Setting the type of writing to either internal or external memory for each layer of the first layer group;
• Varying the settings of the type of writing for the layers of the first layer group;
• Computing an improved combination of settings of the type of writing for the layers of the first layer group, especially by estimating a runtime of the computer-implemented neural network and/or a bus load of an external bus which is used for writing to external memory for each combination of settings of the type of writing;
• Setting the type of writing for the layers of the first layer group dependent on the computing.

## Description

### State of the Art

The invention is directed to a method to optimize a computer implemented neural network and a corresponding computer implemented neural network.

Neural networks are state of the art for different applications, e.g. speech recognition, object (e.g. road sign / pedestrian, vehicle) detection, behavior prediction, image classification (e.g. for disease classification in medical images or defect classification in production). In addition, different network accelerators to run the neural network on hardware are known.

### Disclosure of the invention

The invention describes a method to set the type of writing to either internal or external memory for layers of a computer-implemented neural network comprising at least three layers, wherein the output data of each layer is written to an internal memory and/or external memory, including the following steps:
- Dividing the layers of the neural network into at least two layer groups;
- Setting the type of writing to either internal or external memory for each layer of the first layer group;
- Varying the settings of the type of writing for the layers of the first layer group;
- Computing an improved combination of settings of the type of writing for the layers of the first layer group, especially by estimating or measuring the runtime of the computer-implemented neural network and/or a bus load of an external bus which is used for reading to and writing from external memory, for each combination of settings of the type of reading / writing;
- Setting the type of writing for the layers of the first layer group dependent on the computing.

In the step of dividing the layers, at least two groups of layer, so called layer groups are formed. A group can have only one layer. There are different ways and possibilities to form the group. They will be described below and in the embodiments of the invention.

By setting the type of writing of a layer i to external memory, the reading of layer i+1 is automatically changed to reading from external memory as well. The same holds true if the output of layer i is the input to multiple layers, either consecutive, like i+1, i+2 or at arbitrary places in the network j,k,l with {j,k,l,... > i}. It is also possible that the output of layer i forms only a part of the input to another layer j, e.g. if the input to layer j is the concatenation of the outputs of layer i and layer k. The same goes for the other way around. By setting the type of writing of a layer i to internal memory, the reading of layer i+1 is automatically changed to reading from internal memory as well. For writing as well as for reading, bus load (and bandwidth) is needed on the corresponding busses (internal or external bus).

In the step of varying the settings of the type of writing for the layers, different variations can be applied. In one example all possible ways of varying the settings are applied, in other examples only a predefined number of different settings or specific combinations are applied.

During the step of computing, the runtime can be estimated if the systems is simulated or measured, if the system is tested and improved on real hardware. In a specific implementation, the runtime of the computer-implemented neural network and/or a bus load of an external bus, which is used for reading to and writing from external memory, is estimated or measured. In a further specific implementation, this estimation or measurement is done for each combination of settings of the type of reading / writing. In general, not all possibilities of setting the type of writing or reading have to be tested.

In the step of setting the type of writing for the different layers of the first layer group, a specific combination, especially the best combination regarding runtime and/or external bus load, can be saved for the specific layer group. This setting is called a local optimal or local improved setting. There may exist more than one local optimal /improved setting, which all can be saved for the specific layer group. These settings for the first layer group can be part of, but do not have to be part of the global optimal or globally improved settings, which are taking into account all layers. It is possible that the local optimal / improved setting will be overwritten / changed when the information from the local optimal / improved settings of the other groups is available. The local optimal setting of the first layer group can be, but does not have to be, used to find the local optimal / improved settings of the other groups and/or the global optimal / improved setting of the whole network.

When executing a neural network, especially a convolutional neural network (CNN), on a dedicated accelerator (e.g. a neural network accelerator or a convolutional neural network accelerator), often the neural network cannot be executed at once, but the accelerator is executing layer by layer. This makes it necessary to connect the layers, as the output of layer i is the input of (at least) layer i+1 (the output of one layer can also be the input to multiple layers as well as one layer can have multiple inputs from several layers). That means the output data of layer i needs to be written to some memory, so that layer i+1 can read from it.

The memory can be a (usually) larger "external" memory, e.g. DDR (Double Data Rate) memory, that is shared among various accelerators and usually also the CPU. This memory may also be called main memory.

Alternatively a (usually) smaller "internal" memory is used, that can be exclusive to the Neural Network accelerator or is shared only among a small number of accelerators. This memory is normally a high-speed internal memory used for temporary storage of calculations, data, and other work in progress and is also known as scratchpad memory.

The bus connecting the external memory (external bus) is usually busier as more accelerators and/or other applications are using it. Hence the bus load is high and reading / writing data to / from the external memory might not be possible at certain times and needs to be executed later. Stalling (overload of the bus due to other algorithms using the same memory and therefore temporarily no access to data on the memory) might occur in the neural network accelerator, i.e. the execution of an instruction needs to be delayed as data cannot be read / written. One advantage of the external memory is its size, as it can hold more data. Usually fewer accelerators have access to the internal memory, and the neural network accelerator may sometimes have exclusive access to the internal memory, therefore a delay in reading / writing data to / from the internal memory happens much less frequently. Therefore, overall execution might be faster (as fewer executions need to be delayed).

The question is which layers {i,i+1, i+... } should be connected using the external memory and which layers should be connected using the internal memory. The optimization target could for example be a reduced runtime and/or a reduced use of external bandwidth.

Usually a convolutional neural network accelerator does not compute the entire image (or feature map), but the input image / feature map is tiled into overlapping stripes or patches.

Disadvantages of connecting layers via external memory are potentially increased runtime and increased bus load (on the external bus). Advantage is that for convolutional neural networks, overlap in the input image / input feature map is reduced, as the external memory is large enough to store all output tiles of an input image/feature map and there they can be recombined and tiled again to form the input for the next layer.

As for connecting layers via internal memory, the disadvantages and advantages are exactly reversed: as overlap increases, the runtime also increases as pixels are computed several times, therefore the reduction in runtime by connecting layers via internal memory could be potentially cancelled out by multiple (redundant) computing of the same pixels.

Therefore, there is a need to find an optimal setting for a given network that defines which layers should be connected via the internal memory and which layers should be connected via the external memory.

A brute force optimization (i.e. testing all possible combinations) is usually not possible to be computed in a reasonable time, as the number of possible combinations grows exponentially with the number of layers.

Therefore, in the presented method a neural network graph is split into groups, wherein each group is improved individually.

By applying the method of the invention, it is possible to improve, especially by minimizing the runtime and/or the bus load of an external bus (which is used for writing to external memory), a computer implemented neural network. By adapting the setting of writing of the individual layers of the neural network to either internal or external memory the runtime and therefore the performance of a system using the results of the neural network can be improved and/or optimized.

To compute an improved combination of settings of the type of writing for the layers of the first layer group the processing of the neural network can be simulated (the simulation simulates the hardware on which the neural network will run). To estimate a run time, one or more pictures or other input data can be fed to the network and the time to receive the results can be estimated.
Besides using a simulation it might also be possible to measure the runtime and bandwidth on the hardware (e.g. by using Lauterbach Trace).

To estimate the used bus load of the external bus for different combination of settings of the type of writing for the layers of the first layer group, one can also simply use the simulation and add up the used external bus load within the layer group. In most cases the runtime can be reduced, by reducing the external bus load. Therefore, it is possible to improve the system by minimizing the external bus load.

By changing the combination of settings of the type of writing for the layers of a layer group, the simulator can additionally change the tiling of data (sometimes has to!). Especially, when writing to the internal memory it can be necessary to change the tiling to reduce the data size (due to the reduced memory size of the internal memory compared to the external memory).

One goal of optimization of a group can be to decrease the runtime of the entire network (or of that group) and/or reduce the external bandwidth needed (measured for the group only or for the entire network).
As described above, locally changing how layers are connected can have an effect (on runtime and external bandwidth) not only on the local group, but also on the entire network, as tile-sizes could change as well.

In a preferred implementation of the method, the layer groups are disjoint. Therefore, one layer is only part of one defined group.

This implementation offers the advantage, that the time for calculating an improved setting of the type of writing for the layers of the neural network can be reduced.

In another preferred implementation of the method, the neural network is divided into at least 3, especially 4, or more especially at least 5 layer groups.

In another preferred implementation of the method, all layers of the neural network, which are not part of the first layer group, are kept within a predefined state during the variation, especially wherein the type of writing of all other layers is set to either external or internal memory.

This implementation has the advantage that the calculated improved settings are all based on a common approach and therefore deliver good results.

In another implementation of the method, the steps of setting, varying and computing are repeated for at least two layer groups to gain at least a first and a second improved layer group, each with an improved combination of settings of the type of writing for the layers of each layer group, based on the computation. The steps of setting, varying and computing are especially repeated for all layer groups.

By setting, varying and computing improved layer groups are generated. These improved layer groups can be completely independent of each other, for example when all other layers, which are not part of the layer group which gets improved, are set to a predefined stage. If, on the other hand, the already improved type of writing is applied to layers, which are not part of the layer group which gets improved, the results of the improved layer group already depends on the improved settings of other layers.

In another implementation of the method, an improved combination of improved layer groups is computed, especially by estimating the runtime of the entire neural network with different combinations of the individually improved layer groups.

In this step the entire neural network is improved. Instead of varying the setting of the type of writing for all layers of the neural network, which could take extremely long, only the already improved layer groups are varied. The best combination of improved layer groups is computed to get the improved setting for all layers of the entire network.

In another implementation of the method, all layers of the neural network, which are not part of the improved layer groups which are combined, are kept within a predefined state. The type of writing of all other layers is especially set to either external or internal memory.

This approach is similar to the method for computing an improved layer group. Instead of setting all layers, which are not part of a currently improved layer group into a predefined state, only the layers, which are not part of the combined already improved layer groups, are set to the predefined state.

One result of the computing could be, that the network works best, if only one improved layer group is applied and all other layers are in the predefined stage. In this case all tested / variated or all possible combinations of the different improved layer groups are worse than applying only one improved layer group.

Examples for possible predefines state are: all layers are set to write to external memory or all layers to write only to internal memory. Another option is to alternate between writing to internal and to external memory. Another approach could be that only the last layer of a layer group writes to external an all other layers to internal memory.

In another implementation of the method, the improved layer groups are sorted and the computing of an improved combination of improved layer groups starts with the first improved layer group and continues with combining the second improved layer group, wherein the type of writing of the layers of the improved first layer group is maintained and all other layers, not belonging to the first or second improved layer group, are set to a predefined state, especially wherein the type of writing of all other layers is set to either external or internal memory, and especially wherein the computing of an improved combination of improved layer groups ends by combining the last improved layer group with at least another improved layer group, especially wherein all other layers not belonging to the last group are already set to an improved type of writing.

This is a so-called greedy approach, where each improvement step is based on the improvements in the steps before. Depending on the structure of the neural network and/or the system in which the network is embedded, this approach can lead to the best overall results for the network.

In another implementation of the method, the computer implemented neural network is defined by an acyclic directed graph G with layers and directed edges, wherein a layer group comprises a specific set of layers.

Normally all CNNs can be defined in that way. This approach makes it easy to order the layers and to apply this method properly.

In another implementation of the method the layer groups are formed by traversing the graph G, starting from an input layer, wherein a layer L_i is added to the current group, if the layer L_i does not branch, i.e. the output of the layer L_i is only input to exactly one other layer.

This approach offers an easy and consistent way to split the neural network into different groups, which afterwards can be improved individually by calculating an improved combination of settings of the type of writing for the layers of the different layer groups.

In another implementation of the method, at least one group is finalized by adding Layer L_i, if layer L_i branches, i.e. the output of the layer L_i serves as input for at least two other layers.

In another implementation of the method, the at least two other layers form a starting layer for at least two new groups of layers.

The last two approaches provide a comprehensible and reproducible way of splitting the layers into defined layer groups.

In addition to the method, a system comprising a computer implemented neural network, especially for semantic segmentation of images, and an internal and an external memory, is claimed. The layers of the neural network are set to either write to the internal or the external memory, wherein the type of writing to either internal or external memory of the different layers was improved by a method according to one of the above disclosed methods.

To use the results of the neural network, the network can be embedded into a specific hardware with internal and external memory. The hardware can for example be formed by a specific accelerator, e.g. a neural network accelerator, which is optimized to execute the necessary computational operations of the neural network.

The claimed system can be used for various applications. One example is the use of the computer implemented neural network in a method for semantic segmentation of images, especially in a method for providing a control signal for automatically controlling a robot based on the semantic segmentation.

Furthermore, the described algorithm for optimizing the execution of a convolutional neural network (CNN) can for example be applied to a neural network for semantic segmentation. This CNN can for example be part of a driver assistance function, i.e. for lane keeping support and/or lane departure warning and/or brake assist or for an autonomous driving function without any driver input.

This invention can also be used to optimize the execution of neural networks on accelerators, e.g. for semantic segmentation, speech recognition, object detection. It hence can be used in all areas where neural networks are used. Neural networks can for example be used in various fields, e.g. speech processing (automatic translation, automatic subtitle generation of videos), image processing (autonomous driving, driver assistance functions, image enhancement, object detection, surveillance, quality monitoring) and many more.

### Figures

Figure 1 shows the processing of layers in a simple (without side branches) neural network
Figure 2 shows an example of defining groups of a network.
Figure 3a shows an example were overlapping layers are assigned to group3
Figure 3b shows an example were overlapping layers form their own group
Figure 4 shows an example output after optimizing each group individually. Layers that write to external memory are underlined and bold.
Figure 5 shows an example of a global optimization. Improved groups group1* and group4* are combined, all layers from all other groups are set to read/write from/to external memory.
Figure 6 shows an example of defining groups of a network.

### Exemplary Embodiments

The first embodiment describes an algorithm to find an improved setting for executing a given neural network on a dedicated hardware.

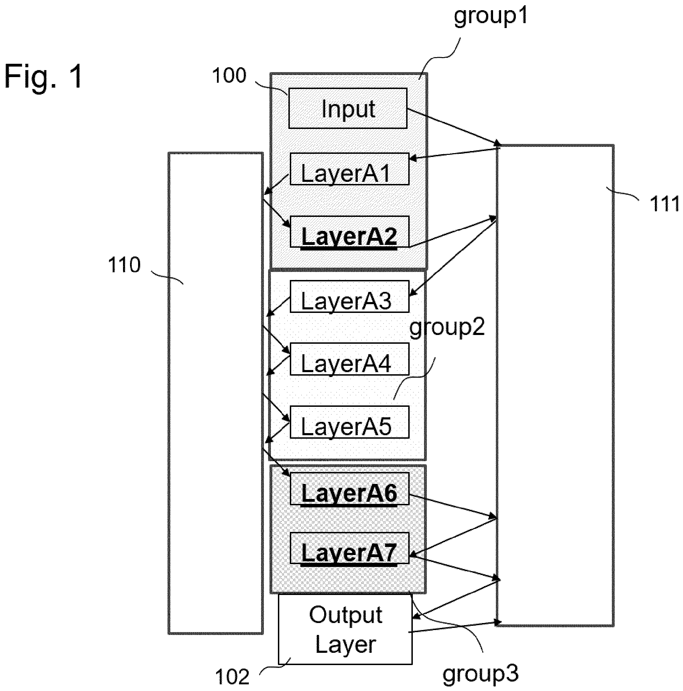

Fig. 1 shows the structure of the first example of the neural network after applying the below described algorithm. The network is a linear network (i.e. a simple network, which does not have any branches).The output of the underlined layers A2, A6 and A7 are written to external memory 111, i.e. layers A2-A3, A6-A7-A8 are connected via the external memory 111, whereas the output of layers A1, A3, A4, A5 are written to the internal memory 110, i.e. layers A1-A2, A3-A4-A5-A6 are connected via the internal memory 110. The input 100 of the neural network and the final output 102 are also written to external memory 111.

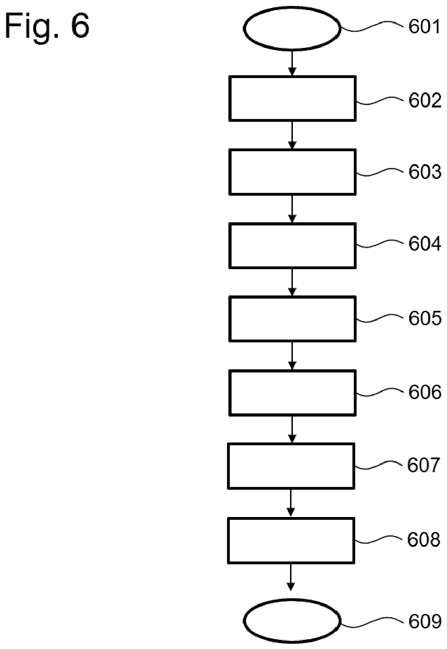

The improved combination of settings of the type of writing for the layers of the network was gained by applying the following method to set the type of writing to either internal 110 or external 111 memory for layers of a computer-implemented neural network, which is shown in Fig. 6.

The method starts with step 601.

In step 602 the layers of the neural network are divided into three layer groups, a first layer group group1, a second layer group group2 and a third layer group group3. The dividing was chosen to get three groups of equal size.

In step 603 the type of writing to either internal or external memory for each layer of the first layer group is set.

In step 604 the settings of the type of writing for the layers of the first layer group are varied.

In step 605 an improved combination of settings of the type of writing for the layers of the first layer group are computed. In this embodiment, the combination is estimated by minimizing the runtime of the computer-implemented neural network. To compute the runtime, the hardware embedded system was simulated and the runtime was calculated based on specific input date. The runtime may also be measured on the hardware embedded system, e.g. by using a Lauterbach device.

In step 606 the type of writing for the layers of the first layer group is set dependent on the computing to gain an improved layer group group1*.

In this embodiment the steps 603, 604, 605 and 606 are repeated for the second layer group group2 and the third layer group group3 to gain improved layer groups group2* and group3*.

In step 607 an improved combination of the improved layer groups group1*, group2* and group3* is computed. In this embodiment the calculation is done by estimating the runtime and bandwidth (especially to / from the external memory) of the entire neural network with different combinations of the individually improved layer groups group1*, group2* and group3*.

Based on the computation in step 607 the improved setting is applied to the neural network to gain the improved network, which is shown in Fig. 1.

The method ends in step 609.

In this first embodiment, the neural network graph is split into groups, wherein each group is optimized individually and then the entire network is optimized by combining only the optimized groups.

In another embodiment, it is assumed that input 100 and output 102 are always written to external memory and are not part of the optimization/improving scheme. But in general, these layers can also write to internal memory and can be included in the optimization process.

In another embodiment, the whole network is split into groups and each of the groups is optimized individually, while assuming all layers that are not belonging to the group are connected via external memory.

One way to define layer groups is described in the following embodiment:
Let's assume, the network is defined by an acyclic directed Graph G=(L,E) with layers L and directed edges E.

To form the layer groups {G_J} of the network, the graph G is traversed, starting from the input layer. If a Layer L_i does NOT branch, i.e. the layer is only input to exactly one layer, the layer L_i is added to the current group G_j. When a layer L_i branches, i.e. the layer is connected to n>=2 layer, the layer group is finalized. Each of the n layer, the output of layer L_i is connected to, defines a starting layer for one new group.

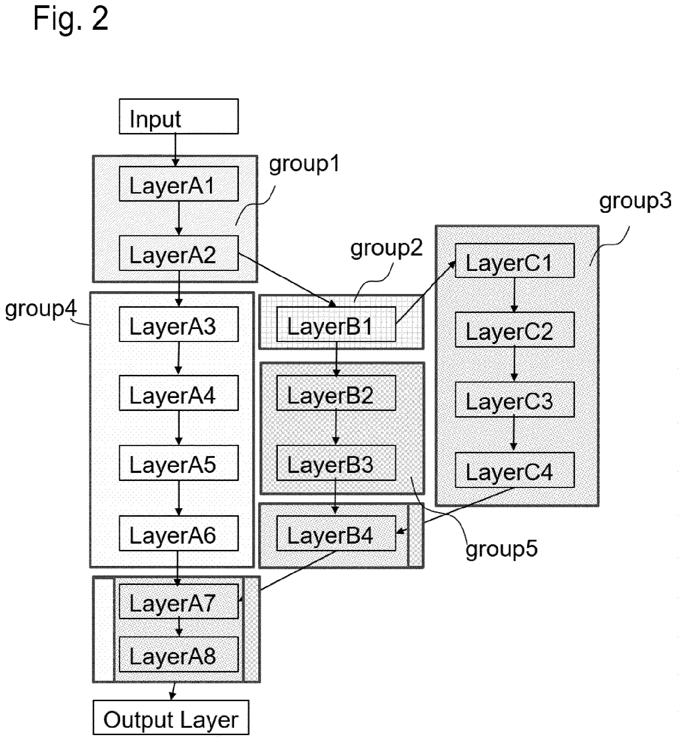

Following the procedure above, the network in Fig. 2 is grouped into five groups (they may overlap):
- Group 1: LayerA1-A2
- Group 2: LayerB1
- Group 3: LayerC1-C2-C3-C4-B4-A7-A8
- Group 4: LayerA3-A4-A5-A6-A7-A8
- Group 5: LayerB2-B3-B4-A7-A8

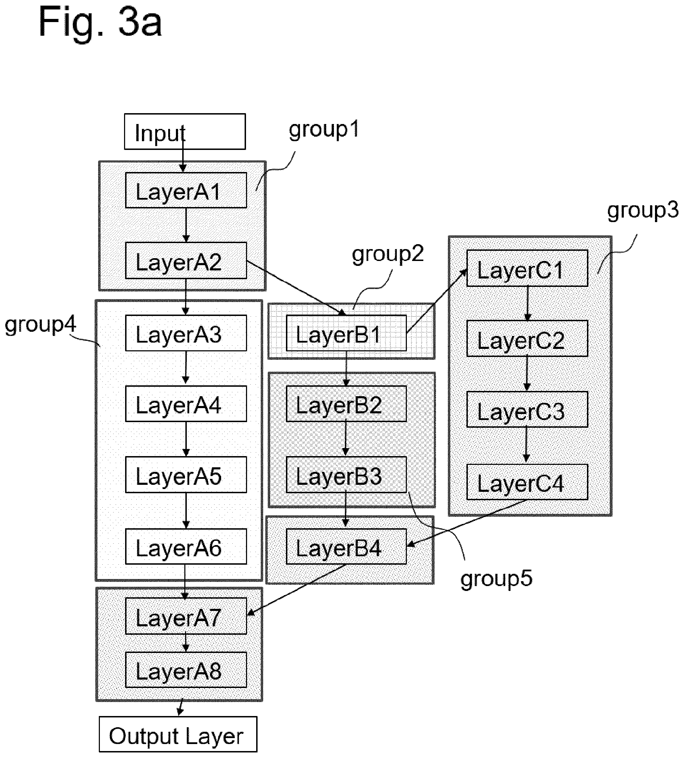

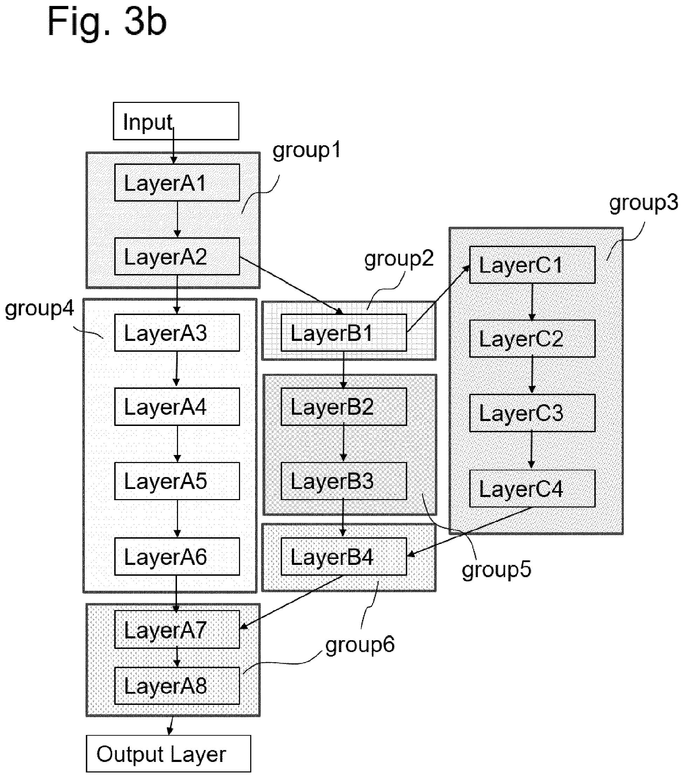

The overlapping nodes (here B4-A7-A8) are present in multiple groups and can be handled in different ways (see for example Fig. 3a and Fig. 3b):
a) The overlapping nodes form an own group, i.e. group 6: LayerB4-A7-A8 (they are deleted from groups1 to group5) (see Fig. 3b)
b) The overlapping nodes are exclusively assigned to one group (in the example above: group 3 (see Fig. 3a), e.g. by using the group, which would be the shortest (or longest) without the overlapping group (in this case, group 5) or randomly assign it to one of the groups.

It is possible that a group only consists of one node.

To make optimization feasible, each found group is optimized individually, e.g. by testing all possible combinations within that group, assuming the layers in all other groups are connected via external memory. For instance, if group 3 consists of layers C1-C2-C3-C4 (as in this example the overlapping groups form their own layer group) (see Fig. 3b), following combinations need to be tested (here C1 always reads from external memory, as it is the starting node of a group and C4 always writes out to external memory as it is the end node of the group (in other embodiments, C1 does not necessarily write to external memory)):

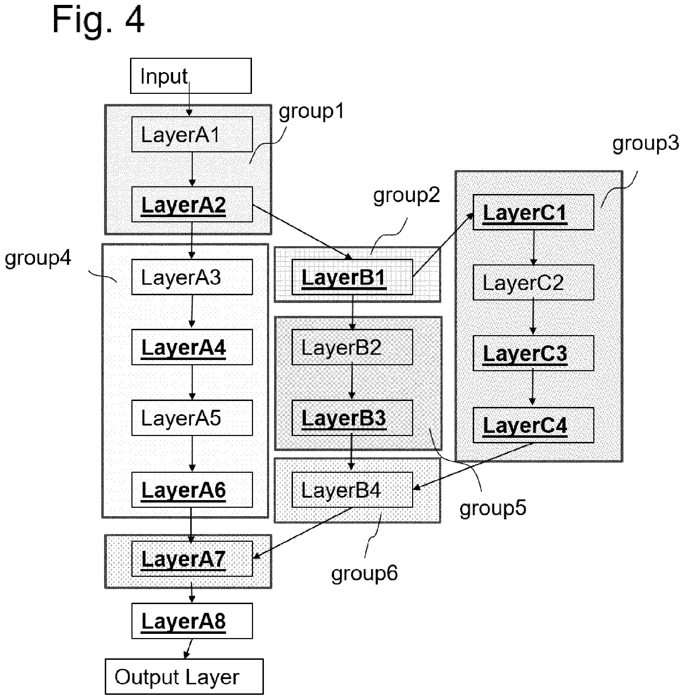

Fig. 4 shows an improved neural network after applying the described method. "L0-L1" means, that layers L0-L1 reads / writes are connected via internal memory,
i.e. L0 writes to internal memory, L1 reads from internal memory. Bold, underlined means that the layer writes to external memory.
1. C1-C2-C3-**C4**; all layers are connected via internal memory, C4 writes to external memory, C1 reads from external memory)
2. **C1** C2-C3-**C4**; C1 and C4 write to external memory, C1 and C2 read from external memory
3. C1-**C2** C3-**C4**; C2, C4 write to external memory, C1 and C3 read from external memory
4. C1-C2-**C3** C4; C1 reads from external memory, writes to internal memory. C2 reads and writes from/to internal memory. C3 reads from internal memory, writes to external memory. C4 reads and writes from/to external memory
5. **C1** C2-C3 **C4**
6. **C1 C2** C3-**C4**
7. C1-**C2 C3 C4**
**8. C1 C2 C3 C4**

For each of the above eight possible ways of connecting layers C1 to C4 the KPI (Key Performance Indicator, either regarding the runtime or regarding the minimization of external bandwidth (on the external bus)) is measured (the combination of runtime and bandwidth is also possible for all embodiments). The best (or the best n, e.g. n=2 or 3) of the eight possible ways is stored.

Fig. 4 shows an exemplary optimization of the whole network. In this network, following layers are connected via internal memory:
- A1-A2* (of group 1) (the asterisk * just shows that it is an optimum)
- A3-A4* (of group 4)
- A5-A6* (of group 2)
- B2-B3* (of group 5)
- C2-C3* (of group 3) (this corresponds to 5. **C1** C2-C3 **C4)**

All other layers are connected via external memory. The underlined and bold layers write their output to the external memory.

To find the optimal global settings for a given network (w.r.t. performance indicator runtime and/or external bandwidth) the optimal settings for each group are combined, e.g. by testing all possible combinations of the optimal groups. This is necessary as each group optimum was found locally, i.e. by assuming all layers not belonging to the group are connected via external memory. For each combination the performance indicator is measured, the combination which is optimal is taken as the global optimum.

In one embodiment it is assumed that in the example described above a local optimum was found for each of the six groups. They are referred as group1*, ..., group6* in the following. To find the one global optimum one way is to check all possible ways of combining these 6 groups, i.e.:
- group1* + group2*, (all layers from the other groups are connected via external memory)
- group1* + group3*
- group1* + group4*
- ...
- group1* + group2* + group6*

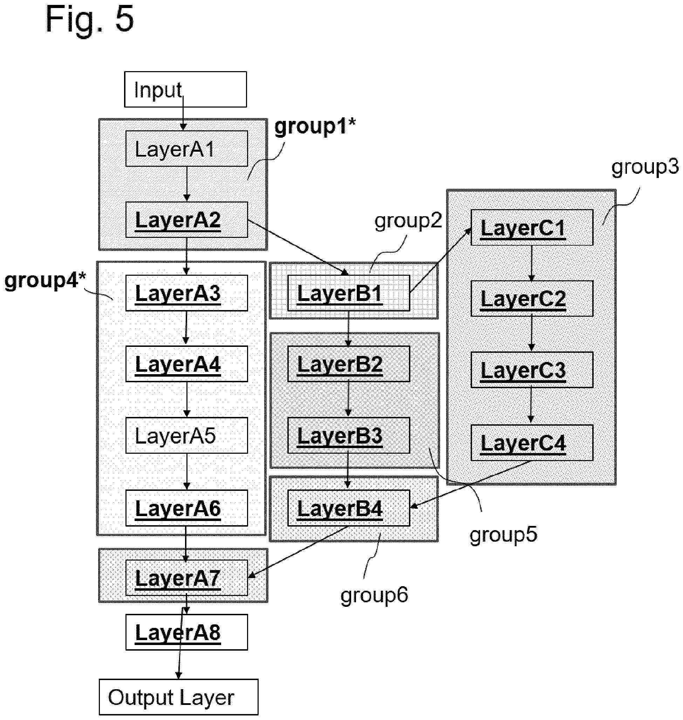

See Fig. 5 for an example, where group1* and group4* were combined and all other layers are connected via external memory.

There are also alternative optimization strategies:
In the optimization strategy of the above described embodiment it is assumed that by default all layers are connected via external memory and a group is optimized by testing all possibilities of connecting layers in that group via internal memory.

Alternatively, it could be assumed that all layers are already connected via internal memory (from the beginning) and a group is optimized by finding the best setting for connecting some of the layers in that group via external memory.

In the optimization strategy of the above described embodiment it is assumed that each group was optimized independently from each other group, and later the best overall combination of the optimized groups was found. In another embodiment a greedy approach is used for optimization: e.g.
(1) Split the network into groups, for example by the splitting them as described above ("Forming the groups of the graph")
(2) Order the groups (e.g. by topologically sorting the graph and ordering the groups according to which starting nodes appear first in the sorted graph)
(3) Optimize the i-th group (start with the first group) and fix its settings (i.e. if layers are connected via internal or external memory in this group)
(4) Optimize the i+1-th group (now, the first i groups already have locally optimal settings how the layers are connected. That means in the first i groups some layers are connected via internal memory, some others via external memory. In the original approach all other layers outside of the group were assumed to be connected via external memory) and fix its settings.
(5) Continue until all groups are optimized.

Instead of optimizing KPI runtime and external bandwidth separately, in another embodiment optimization of both KPIs is combined, e.g. by forming the groups separately, i.e. after forming the groups we have two sets of optimal groups groupl_A*, groupl_B*, ..., group6_A*, group6_B*. Finding the global optimum can be done by combining all these 12 groups (as explained above "Find global optimum").

## Claims

1. Method to set the type of writing to either internal (110) or external (111) memory for layers of a computer-implemented neural network comprising at least three layers, wherein the output data of each layer is written to an internal memory (110) and/or external memory (111), including the following steps:
• Dividing (602) the layers of the neural network into at least two layer groups;
• Setting (603) the type of writing to either internal or external memory for each layer of the first layer group;
• Varying (604) the settings of the type of writing for the layers of the first layer group;
• Computing (605) an improved combination of settings of the type of writing for the layers of the first layer group, especially by estimating or measuring the runtime of the computer-implemented neural network and/or a bus load of an external bus which is used for reading to and writing from external memory, for each combination of settings of the type of reading / writing;
• Setting (606) the type of writing for the layers of the first layer group dependent on the computing.

2. Method according to claim 1, wherein the layer groups are disjoint.

3. Method according to one of the preceding claims, wherein the neural network is divided into at least 3, especially 4, or more especially at least 5 layer groups.

4. Method according to one of the preceding claims, wherein during the variation, all layers of the neural network, which are not part of the first layer group, are kept within a predefined state, especially wherein the type of writing of all other layers is set to either external or internal memory.

5. Method according to one of the preceding claims, wherein the steps of setting the type of writing to either internal or external memory for each layer of the first layer group, varying, computing and setting the type of writing for the layers of the first layer group dependent on the computation are repeated for at least two layer groups to gain at least a first and a second improved layer group, each with an improved combination of settings of the type of writing for the layers of each layer group, based on the computation, especially wherein the steps of setting, varying and computation are repeated for all layer groups.

6. Method according to claim 5, wherein an improved combination of the improved layer groups is computed, especially by estimating and/or measuring the runtime of the entire neural network with different combinations of the individually improved layer groups.

7. Method according to claim 6, wherein all layers of the neural network, which are not part of the improved layer groups which are combined, are kept within a predefined state, especially wherein the type of writing of all other layers is set to either external or internal memory.

8. Method according to claim 6 or 7, wherein the improved layer groups are sorted and the computation of an improved combination of improved layer groups starts with the first layer group and continues with estimating / measuring the runtime and / or bandwidth by combining the second improved layer group, wherein the type of writing of the layers of the improved first layer group is maintained and all other layers, not belonging to the first or second improved layer group, are set to a predefined state, especially wherein the type of writing of all other layers is set to either external or internal memory, and especially wherein the computing of an improved combination of improved layer groups ends by combining the last improved layer group with at least another improved layer group, especially wherein all other layers not belonging to the last group are already set to an improved type of writing.

9. Method according to one of the preceding claims, wherein the computer implemented neural network is defined by an acyclic directed graph G with layers and directed edges, wherein a layer group comprises a specific set of layers.

10. The method according to claim 9, wherein the layer groups are formed by traversing the graph G, starting from an input layer, wherein a layer L_i is added to the current group, if the layer L_i does not branch, i.e. the output of the layer L_i is only input to exactly one other layer.

11. Method according to claim 9 or 10, wherein at least one group is finalized by adding Layer L_i, if layer L_i branches, i.e. the output of the layer L_i serves as input for at least two other layers.

12. Method according to claim 11, wherein the at least two other layers form a starting layer for at least two new groups of layers.

13. System comprising a computer implemented neural network, especially for semantic segmentation of images, an internal and an external memory, wherein the layers of the neural network are set to either write to the internal or the external memory, wherein the type of writing to either internal or external memory of the different layers was improved by a method according to one of the preceding claims.

14. Use of the computer implemented neural network according to claim 13 in a method for semantic segmentation of images, especially in a method for providing a control signal for automatically controlling a robot based on the semantic segmentation.
